# EUROPEAN PATENT APPLICATION

(11) **EP 4 834 471 A1**
(43) Date of publication of application: **04.11.2026**
(21) Application number: 25745053.6
(22) Date of filing: 21.01.2025
(51) Int. Cl.: B01J 20/28, B01J 20/20, C12F 5/00

(54) **POROUS MATERIAL FOR PURIFYING ALCOHOL, MOLDED BODY USING SAME, FILTER FOR PURIFYING ALCOHOL, AND METHOD FOR PURIFYING ALCOHOL FOR BEVERAGE**

(30) Priority: 26.01.2024 JP 2024010011
(71) Applicant: Kuraray Co., Ltd., Kurashiki-shi, Okayama 710-0801 (JP)
(72) Inventor: YOSHINOBU, Hiroe, Bizen-shi, Okayama 705-0025 (JP); ISHIKAWA, Kenichi, Bizen-shi, Okayama 705-0025 (JP); UKAI, Yu, Bizen-shi, Okayama 705-0025 (JP); HANAMOTO, Tetsuya, Bizen-shi, Okayama 705-0025 (JP); KAKITA, Yuki, Bizen-shi, Okayama 705-0025 (JP); TAGUCHI, Yasufumi, Bizen-shi, Okayama 705-0025 (JP)
(74) Representative: Müller-Boré & Partner Patentanwälte PartG mbB
(86) International application number: PCT/JP2025/001697
(87) International publication number: WO 2025/159069

(57) **Abstract**

One aspect of the present invention relates to a porous material that satisfies at least one of a mesopore volume of 0.550 cm³/g or less or a micropore volume of 1.00 cm³/g or more, and has a BET specific surface area of 500 m²/g or more.

## Description

### Technical Field

The present invention relates to a porous material for alcohol purification, a molded body using the same, a filter for alcohol purification, and a method for purifying beverage alcohol.

### Background Art

Various beverage alcohols such as beer and refined sake are usually produced through a purification step of adsorbing and removing impurities generated during fermentation, pigmented organic substances that cause coloration, and the like in the production process. In the purification step, it is known that a porous material such as activated carbon is used as an adsorbent.

For example, Patent Literature 1 reports a method for producing brewed liquor, characterized by selectively adsorbing and removing purine body compounds using activated carbon having an average pore diameter of 1.5 to 2.3 nm as an adsorbent in a step for producing brewed liquor from a non-malt raw material.

The porous material having pores, such as activated carbon described in Patent Literature 1, has a problem that a substance present in the air (for example, toluene) is unintentionally adsorbed during storage and/or transportation before being used for alcohol purification. The above-described adsorbate unintentionally contained in the porous material is likely to be eluted into alcohol. Therefore, when the porous material is used for purification, the impurities may be released into beverage alcohol to be purified. However, a means for solving the problem including the technique described in Patent Literature 1 has not been sufficiently studied so far.

Therefore, in view of the above current situation, a main object of the present invention is to provide a porous material for alcohol purification in which release of an adsorbate unintentionally adsorbed before use or the like is suppressed, and a molded body and a filter for purification using the same.

### Citation List

### Patent Literature

Patent Literature 1: JP 2004-113189 A

### Summary of Invention

As a result of intensive studies to solve the above problems, the present inventors have found that the above problems can be solved by a porous material having the following configuration, and have completed the present invention by further conducting studies based on the findings.

That is, the porous material according to a first aspect of the present invention is a porous material that satisfies at least one of a mesopore volume of 0.550 cm³/g or less or a micropore volume of 1.00 cm³/g or more, and has a BET specific surface area of 500 m²/g or more.

### Brief Description of Drawings

[FIG. 1] FIG. 1 is a perspective view of a mold for preparing a molded body of an adsorption filter of the present embodiment.
[FIG. 2] FIG. 2 is a schematic view showing an automatic grinder used in Examples for producing a molded body.

### Description of Embodiments

Hereinafter, embodiments according to the present invention will be specifically described, but the present invention is not limited thereto.

### (Porous Material)

### • Porous Material

The porous material of the present embodiment, and a molded body and a filter containing a porous material as described later are used for alcohol purification. In the present embodiment, the alcohol mainly means beverage alcohol, and the porous material of the present embodiment is particularly suitably used as an adsorbent that adsorbs and removes impurities (pigmented organic substance and the like) of fermented alcohol. Specific examples of the fermented alcohol include beer, refined sake, wine, whiskey, distilled spirit, and the like.

In addition, specific examples of impurities that can be adsorbed and removed by the porous material of the present embodiment include components that release pigments and odors, lipid and purine compounds, and the like.

The porous material of the present embodiment satisfies at least one of a mesopore volume of 0.550 cm³/g or less or a micropore volume of 1.00 cm³/g or more, and has a BET specific surface area of 500 m²/g or more. By having such a configuration, the porous material has an excellent advantage that it is difficult to release an adsorbate adsorbed before use into alcohol while adsorbing and removing impurities in purification of alcohol as described above.

Therefore, according to the present invention, it is possible to provide a porous material for alcohol purification in which release of an adsorbate adsorbed before use or the like is suppressed, a molded body and a filter for purification using the same, and a method for purifying beverage alcohol.

The porous material of the present embodiment needs to have a specific surface area of at least 500 m²/g or more. The specific surface area is derived from the fact that pores for the porous material to adsorb a substance were formed, and when the porous material has a specific surface area of 500 m²/g or more, the porous material can sufficiently adsorb impurities as described above in alcohol purification. On the other hand, the upper limit value of the specific surface area is not particularly limited, but an excessively large specific surface area is not preferable since the mechanical strength of the porous material decreases. The specific surface area is preferably in the range of 600 to 3500 m²/g, and more preferably 750 to 2500 m²/g from the viewpoint of achieving both the enhancement of the adsorption performance during alcohol purification and the suppression of the generation of fine powder generated by pulverizing the porous material during purification. Specifically, the specific surface area may be 500 m²/g, 750 m²/g, 1000 m²/g, 1250 m²/g, 1500 m²/g, 1750 m²/g, 2000 m²/g, 2250 m²/g, 2500 m²/g, 2750 m²/g, 3000 m²/g, 3250 m²/g, 3500 m²/g, or the like.

In the present embodiment, the BET specific surface area means a specific surface area calculated by a nitrogen adsorption method, and is a value measured by a method described in Examples described later.

The pores of the porous material can be classified into micropores (less than 2 nm in diameter), mesopores (2 to 50 nm in diameter), and macropores (more than 50 nm in diameter) according to their diameters (the numbers inside the parentheses indicate the IUPAC classification criteria). The porous material of the present embodiment satisfies, in addition to the above specific surface area, either a mesopore volume of 0.550 cm³/g or less or a micropore volume of 1.00 cm³/g or more. With such a configuration, it is possible to suppress desorption of impurities unintentionally adsorbed on the porous material before use so as to suppress release of the impurities to alcohol.

From the viewpoint of further suppressing the desorption of impurities, the mesopore volume of the porous material is preferably in the range of 0.010 to 0.500 cm³/g, and more preferably in the range of 0.010 to 0.450 cm³/g. From the same viewpoint, the micropore volume of the porous material is preferably in the range of 1.00 to 4.00 cm³/g, and more preferably in the range of 1.10 to 3.50 cm³/g.

The porous material of the present embodiment needs to satisfy at least one of the mesopore volume or the micropore volume. The reason is considered as follows. The mesopore volume is preferably small since the adsorbate adsorbed in mesopores is easily released, and the micropore volume is preferably large since the adsorbate adsorbed in micropores is hardly released. Since mesopores and micropores each independently contribute to the desorption of impurities, it is considered that the desorption of impurities can be suppressed when the porous material satisfies at least one of the above mesopore volume or the above micropore volume. Of course, the porous material of the present embodiment may satisfy both the above mesopore volume and the above micropore volume.

The mesopore volume of the porous material can be calculated from the nitrogen adsorption isotherm using the Barrett-Joyner-Halenda (BJH) method. Also, the micropore volume can be calculated from the nitrogen adsorption isotherm using the MP method. Specific measurement of the nitrogen adsorption isotherm and calculation of the mesopore volume and the micropore volume can be performed by the methods described in [Measurement of Nitrogen Adsorption Isotherm], [Measurement of Mesopore Volume by BJH Method], and [Measurement of Micropore Volume by MP Method] in Examples described later.

In the present specification, the unintended adsorbed substance that is unintentionally adsorbed on the porous material is not particularly limited, but examples thereof include substances present in the atmosphere, such as toluene, benzene, formaldehyde, hexane, phenol, and the like.

The porous material of the present embodiment preferably has an amount of acid functional groups of 0.700 meq/g or less. Since the hydrophobicity of the porous material is improved by reducing the amount of acid functional groups, the organic substance can be more strongly adsorbed. Therefore, it is possible to further suppress the desorption of an unintended adsorbed substance adsorbed on the porous material, and it is possible to further reduce the elution of impurities into alcohol. In addition, the amount of impurities adsorbed during alcohol purification is considered to increase.

The lower limit value is not particularly limited as long as the amount of acid functional groups is 0.700 meq/g or less, but is more preferably 0.010 to 0.600 meq/g, still more preferably 0.020 to 0.500 meq/g, and particularly preferably 0.030 to 0.400 meq/g from the viewpoint of increasing the affinity with the adsorbed substance.

The "amount of acid functional groups in the porous material" in the present embodiment is a value measured by a method described in Examples described later.

The porous material of the present embodiment preferably has a toluene adsorption performance of about 10 to 80 wt%. In the present embodiment, the "toluene adsorption performance" is used as an index of the organic substance adsorption performance of the porous material. The toluene adsorption performance of the porous material can be measured by the method described in Examples described later.

The porous material of the present embodiment preferably has a methylene blue adsorption performance of about 50 to 400 mg/g. In the present embodiment, the "methylene blue adsorption performance" is used as an index of alcohol purification performance (performance capable of removing a dye contained in alcohol). The methylene blue adsorption performance of the porous material can be measured by the method described in Examples described later.

As the porous material of the present embodiment, a porous material such as activated carbon, silica gel, zeolite, or diatomaceous earth can be used. Among them, it is most desirable to use activated carbon as the porous material from the viewpoint of high adsorption capacity of organic substances.

### • Activated Carbon

The activated carbon suitably used in the present embodiment may be activated carbon obtained from any carbonaceous material as long as it becomes activated carbon by carbonizing and activating the carbonaceous material.

In the present embodiment, the activated carbon may be any one selected from powdered activated carbon, fibrous activated carbon, granular activated carbon, and pelletized activated carbon. Fibrous activated carbon is activated carbon obtained by carbonizing and activating appropriate fibers, and examples thereof include phenol resin-based activated carbon, acrylic resin-based activated carbon, cellulose-based activated carbon, and coal pitch-based activated carbon. The fiber length, the cross-sectional diameter, and the like can be appropriately set.

Examples of the raw material of the granular activated carbon include raw materials such as wood (waste wood, thinned wood, sawdust), coffee grounds, rice husks, coconut husks, bark, and fruits. These naturally derived raw materials are carbonized and activated to easily develop pores. Also, since waste is secondarily used, these raw materials can be procured at low cost. In addition, a fired product derived from a synthetic resin such as a tire, petroleum pitch, a urethane resin, or a phenol resin, and further, coal or the like can also be used as a raw material.

Among them, the activated carbon of the present embodiment is preferably powdered, granular or pelletized activated carbon. The powdered activated carbon and the pelletized activated carbon can be produced by pulverizing or molding the fibrous or granular activated carbon described above.

In a preferred embodiment, granular or powdered activated carbon having an average particle size in the range of 10 to 500 µm is used. This has an advantage that the filtration time of the adsorbent after adsorption can be shortened or the adsorption time can be shortened. A more preferable average particle size is 50 to 300 µm.

As the activated carbon used in the present embodiment, one type may be used alone, or two or more types of activated carbons may be used in combination.

### • Method for Producing Activated Carbon

The method for producing the porous material of the present embodiment will be described in detail using activated carbon as a specific example.

The activated carbon of the present embodiment can be obtained, for example, by dry-distilling and/or carbonizing the carbonaceous material as described above according to the type of material and necessity, and then subjecting the resulting carbonaceous material to an activation treatment under a mixed gas atmosphere containing water vapor, nitrogen, and carbon dioxide.

For example, when the carbonaceous material is bituminous coal or the like, the dry distillation treatment is preferably performed before the activation treatment. A conventional means can be used for the dry distillation treatment, and usually, the dry distillation treatment can be performed at a temperature of about 400 to 800°C while oxygen or air is blocked.

In addition, when the carbonaceous material is coconut shell, palm shell, wood, or the like, the carbonization treatment is preferably performed before the activation treatment. When performing the carbonization treatment, a conventional means can be used, and usually, the carbonization treatment can be performed at a temperature of, for example, about 400 to 800°C while oxygen or air is blocked.

As a method for activating the carbonaceous material as described above, or a dry distillate or a carbide thereof, either a gas activation method or a chemical activation method can be adopted, and the gas activation method and the chemical activation method may be combined.

When performing gas activation, the activation treatment can be performed by exposing the carbonaceous material to water vapor, carbon dioxide gas, or a mixed gas thereof in a temperature range of 600°C to 1200°C using a fluidized bed, a multi-stage furnace, a rotary furnace, or the like which is a general activated carbon production facility. The activation temperature may be preferably 600°C or higher and lower than 1000°C. In consideration of safety and reactivity, it is preferable to use a water vapor-containing gas containing 10 to 40 vol% of water vapor as the activation gas. The activation time and the temperature raising rate are not particularly limited, and can be appropriately selected according to the type, shape, and size of the carbonaceous material to be selected.

When performing chemical activation, it is performed by, for example, mixing an activator such as zinc chloride, calcium chloride, phosphoric acid, sulfuric acid, sodium hydroxide, potassium hydroxide, magnesium hydroxide, or calcium hydroxide with the carbonaceous material and heating the mixture under an inert gas atmosphere. The heating temperature is about 400 to 700°C. The heating time and the like are not particularly limited, and can be appropriately selected according to the type, shape, and size of the carbonaceous material to be selected.

The activated carbon after the activation treatment may be washed with a washing liquid containing an acid to remove impurities such as metal components contained in the activated carbon. The acid washing can be performed, for example, by immersing the activated carbon after activation in a washing liquid containing an acid. In the acid washing step, the raw material activated carbon may be washed with hydrochloric acid and then washed with water, or water washing and acid washing may be appropriately combined, for example, by repeating acid washing and water washing. For the acid washing liquid, it is preferable to use an inorganic acid such as hydrochloric acid, sulfuric acid, or nitric acid, or an organic acid such as a saturated carboxylic acid such as formic acid, acetic acid, propionic acid, oxalic acid and tartaric acid, or citric acid, or an aromatic carboxylic acid such as benzoic acid and terephthalic acid, and among them, washing with hydrochloric acid is more preferable. When hydrochloric acid is used as the acid washing liquid, dilute hydrochloric acid is preferably used.

The obtained activated carbon may be pulverized by a roll mill or the like, and then dry-classified to adjust the average particle size as necessary.

### (Molded Body)

The molded body of the present embodiment contains the porous material as described above and a binder. The binder used in the present embodiment is not particularly limited as long as it can mold a molded body by entangling the porous material, but is preferably a fibrous binder.

The fibrous binder that can be used in the present embodiment can be widely used regardless of synthetic products and natural products. Specific examples of the binder include acrylic fibers, polyethylene fibers, polypropylene fibers, polyacrylonitrile fibers, cellulose fibers, nylon fibers, aramid fibers, pulp, and the like. The fiber length of the fibrous binder is preferably 4 mm or less. Among them, an acrylic fibrous binder or the like is preferably used from the viewpoint of alcohol resistance, heat resistance, and high strength retention. Two or more of the fibrous binders may be used in combination.

In the present embodiment, the water permeability of the fibrous binder is preferably about 10 to 150 mL in terms of CSF value. The water permeability is more preferably about 20 to 110 mL. In the present embodiment, the CSF value is a value measured in accordance with the Canadian standard freeness method of JIS P8121 (2012) "Pulps - Determination of drainability -". The CSF value can be adjusted, for example, by fibrillating the binder.

The molded body of the present embodiment preferably has an amount of acid functional groups of 0.800 meq/g or less when a part of the molded body was cut out and measured. Since the hydrophobicity of the molded body is improved by reducing the amount of acid functional groups, the organic substance can be more strongly adsorbed. As a result, it is possible to further suppress the desorption of an unintended adsorbed substance adsorbed on the porous material contained in the molded body, and it is possible to further reduce the elution of impurities into alcohol. In addition, the amount of impurities adsorbed during alcohol purification is considered to increase.

The lower limit value is not particularly limited as long as the amount of acid functional groups is 0.800 meq/g or less, but is more preferably 0.010 to 0.750 meq/g, and still more preferably 0.020 to 0.700 meq/g from the viewpoint of increasing the affinity with the adsorbed substance.

The "amount of acid functional groups in the molded body" in the present embodiment is a value measured by a method described in Examples described later.

### • Method for Producing Molded Body

The molded body of the present embodiment is obtained by a production method including a slurry preparation step of dispersing a mixture obtained by mixing a porous carbon material and a binder in water to prepare a slurry, a suction filtration step of filtering the slurry while suctioning the slurry to obtain a preliminary molded body, and a drying step of drying the preliminary molded body to obtain a dried molded body.

The slurry can be prepared, for example, by dispersing a granular or powdered porous carbon material and a fibrous binder in water so as to have a solid content concentration of 1 to 15 wt%. When the solid content concentration of the slurry is too high, dispersion tends to be uneven, and mottling is likely to occur in the molded body. On the other hand, when the solid content concentration is too low, not only the molding time becomes long and the productivity is lowered, but also the density of the molded body becomes high and clogging due to trapping of turbid components easily occurs.

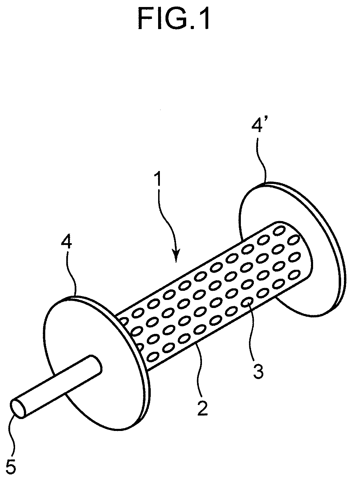

In the suction filtration step, for example, a mold for molding having a large number of holes is put in the slurry, and the slurry is molded by filtering the slurry while suctioning the slurry from the inside of the mold. As the mold for molding, for example, a conventional mold can be used, and for example, a mold 1 for cylindrical molding having a large number of suction small holes 3 on the surface of a core body 2 and flanges 4 and 4' attached to both ends as shown in FIG. 1 can be used. As a suction method, a conventional method, for example, a suction method using a suction pump or the like can be used. Also, after the suction filtration, a step of adjusting the shape of the outer surface may be performed by compressing the preliminary molded body on a shaping table.

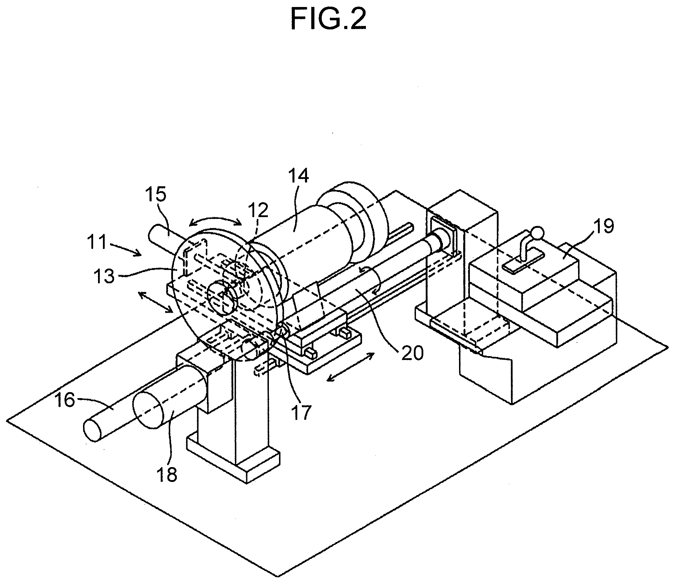

In the drying step, the preliminary molded body obtained in the suction filtration step is removed from the mold and dried with a dryer or the like, whereby a molded body can be obtained. The drying temperature is, for example, about 100 to 150°C (particularly 110 to 130°C), and the drying time is, for example, about 4 to 24 hours (particularly 8 to 16 hours). When the drying temperature is too high, the fibrous binder is likely to be altered or melted to deteriorate the filtration performance or reduce the strength of the molded body. When the drying temperature is too low, the drying time is likely to be long or the drying is likely to be insufficient. Further, a step of grinding (or polishing) the outer surface of the dried molded body may be performed. The grinding can be appropriately performed so as to have a desired size using a known automatic grinder (for example, a grinder shown in FIG. 2) or the like.

### (Filter for Alcohol Purification)

The present embodiment includes a filter for alcohol purification including the above-described porous material. The filter for alcohol purification (hereinafter, also simply referred to as a "filter") of the present embodiment is not particularly limited as long as it includes the above-described porous material, but for example, a molded body containing the porous material and a binder can be used as the filter for alcohol purification.

The filter of the embodiment may contain functional components other than the above as long as the effect of the present invention is not inhibited. For example, an additive such as zeolite may be added in an arbitrary amount for removing heavy metals in the liquid, but in that case, 0.1 to 30 parts by mass is usually blended with respect to the entire filter.

For example, in a case where the above-described molded body is used as a filter, the mixing ratio of the respective components in the filter of the present embodiment is preferably about 1 to 10 parts by mass of the binder with respect to 100 parts by mass of the porous material or a mixture of the porous material and the functional components, from the viewpoint of an adsorption effect, moldability, and the like. When the amount of the binder is less than 1 part by mass, sufficient strength may not be obtained, and a molded body may not be molded. Also, when the amount of the binder exceeds 10 parts by mass, adsorption performance may be deteriorated. It is desirable to blend more preferably 3 to 8 parts by mass of the fibrous binder, and it is desirable to blend still more preferably 3.5 to 6 parts by mass of the fibrous binder.

The filter of the present embodiment may be a cylindrical filter further containing a core in addition to the molded body. The cylindrical shape is advantageous in that the water flow resistance can be reduced, and further, in a case where the filter is used as a cartridge by being packed in a housing as described later, the cartridge can be easily loaded and replaced in a water purifier.

The core that can be used in the present embodiment is not particularly limited as long as it can be inserted into a hollow portion of the cylindrical filter to reinforce the cylindrical filter, but for example, a trical pipe, a netron pipe, or a ceramic filter is preferable. A nonwoven fabric or the like can be wound around the outer periphery of the core, and a porous filter obtained by melt-blowing a polypropylene resin or the like can also be used.

As described above, the filter of the present embodiment is useful as a filter for alcohol purification. The use form of the filter of the present embodiment is not particularly limited, and the filter can be packed in a housing and used as a cartridge for alcohol purification.

The present specification discloses various aspects of the technologies as described above, and the main technologies are summarized below.

That is, the porous material according to the first aspect of the present invention is a porous material that satisfies at least one of a mesopore volume of 0.550 cm³/g or less or a micropore volume of 1.00 cm³/g or more, and has a BET specific surface area of 500 m²/g or more.

Also, a porous material according to a second aspect of the present invention is the porous material for alcohol purification according to the first aspect, having an amount of acid functional groups of 0.700 meq/g or less.

A porous material according to a third aspect of the present invention is the porous material for alcohol purification according to the first or second aspect, which is activated carbon.

A molded body according to a fourth aspect of the present invention contains the porous material for alcohol purification according to any one of the first to third aspects and a binder.

A molded body according to a fifth aspect of the present invention is the molded body according to the fourth aspect, having an amount of acid functional groups of 0.800 meq/g or less when a part of the molded body was cut out and measured.

A filter for alcohol purification according to a sixth aspect of the present invention includes the porous material for alcohol purification according to any one of the first to third aspects or the molded body according to the fourth or fifth aspect.

A method for purifying beverage alcohol according to a seventh aspect of the present invention includes removing impurities contained in fermented alcohol by being adsorbed on the porous material for alcohol purification according to any one of the first to third aspects.

### Examples

Hereinafter, the present invention will be described more specifically with reference to examples, but the present invention is not limited by examples at all.

First, each physical property evaluation test method in the examples will be described.

### [Measurement of Nitrogen Adsorption Isotherm]

Using BELSORP-MAX II manufactured by MicrotracBEL Corp., a carbonaceous material was heated at 300°C for 3 hours under reduced pressure (degree of vacuum: 0.1 kPa or less), and then the nitrogen adsorption isotherm of each porous material at 77 K was measured.

### [Measurement of BET Specific Surface Area]

The nitrogen adsorption isotherm obtained by the above method was analyzed by a multipoint method using the BET equation, and the specific surface area was calculated from the straight line in the region of the relative pressure P/P0 = 0.01 to 0.1 of the obtained curve.

### [Measurement of Mesopore Volume (BJH Method)]

The nitrogen adsorption isotherm was analyzed by the BJH method. As the analysis conditions, the adsorbate molecular weight was 28.013, the adsorbate density was 0.808 g/cm³, and the file data interpolation method was a straight line. Then, the obtained adsorption isotherm was analyzed by the BJH method using data in which (p/p0) was between 0.10 and 0.99, and the pore volume from 2 nm to 50 nm in diameter was calculated.

### [Measurement of Micropore Volume (MP Method)]

The nitrogen adsorption isotherm was analyzed by the MP method to calculate a pore volume of 3.5 nm or less in diameter. In the analysis by the MP method, a reference curve "NGCB-BEL.t" provided by MicrotracBEL Corp. was used.

### [Measurement of Amount of Acid Functional Groups]

The porous material was finely pulverized until the particle size distribution became 2 mm or less and measured. For the molded body, a part of the porous material layer (layer from the outer diameter side to the inner diameter center of the cylindrical molded body) was cut out with a cutter knife, and the cut out material was finely pulverized until the particle size distribution became 2 mm or less, and used for the measurement.

Each of the pulverized product of the porous material and the pulverized product of the molded body was dried at 115°C for 3 hours, and then cooled to room temperature in a desiccator using silica gel as a desiccant, and 1.0 g of the resulting product was used as a measurement sample. The measurement sample was added to 50 mL of a 0.1 mol/L sodium hydroxide solution as an alkali solution, and the mixture was shaken for 30 minutes and then allowed to stand at 25°C for 24 hours. Thereafter, the solution was centrifuged, 10 mL of the supernatant was collected, and neutralization titration was performed with a 0.1 mol/L hydrochloric acid solution to determine the amount of acid functional groups (meq/g).

### [Toluene Adsorption Performance of Porous Material]

The porous material was dried in a constant temperature dryer at 115°C for 3 hours, and then cooled to room temperature in a desiccator using silica gel as a desiccant. Subsequently, toluene-containing dry air having a concentration of 1/10 of the saturation concentration was passed through the porous material in an incubator at 25°C. From the difference between the weight of the porous material when the adsorption equilibrium was reached (the weight of the porous material would not increase) and the weight of the porous material before adsorption, the toluene adsorption amount (wt%) was calculated by the following formula. 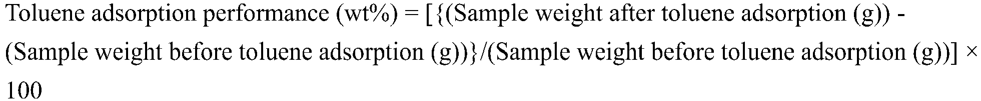 Toluene adsorption performance (wt%) = [{(Sample weight after toluene adsorption (g)) - (Sample weight before toluene adsorption (g))}/(Sample weight before toluene adsorption (g))] × 100

### [Methylene Blue (Dye) Adsorption Performance of Porous Material in Alcohol Liquid]

In order to confirm alcohol purification performance of the porous material, methylene blue adsorption performance in an alcohol liquid was measured. The porous material was pulverized by a sample mill so as to have an average particle size of 30 µm or less, dried in a constant temperature dryer at 115°C for 3 hours, and then cooled to room temperature in a desiccator using silica gel as a desiccant.

0.01 g of this porous material was precisely weighed, and placed in 0.05 L of a liquid prepared by dissolving methylene blue (dye) in a 20 vol% ethanol aqueous solution so as to have a concentration of 120 mg/L, and the mixture was stirred at 25°C for 2 hours, then filtered with No. 5C filter paper, the methylene blue concentration (mg/L) in the filtrate was measured at a wavelength of 665 nm using a spectrophotometer, and the methylene blue adsorption amount (mg/g) per weight of the porous material was calculated by the following formula. 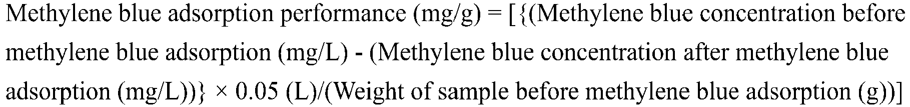 Methylene blue adsorption performance (mg/g) = [{(Methylene blue concentration before methylene blue adsorption (mg/L) - (Methylene blue concentration after methylene blue adsorption (mg/L))} × 0.05 (L)/(Weight of sample before methylene blue adsorption (g))]

### [Porous Material]

### (Example 1)

Coconut shell charcoal obtained by carbonizing coconut shell from the Philippines was subjected to steam activation at 900°C for 1 hour. The obtained coconut shell activated carbon was washed with dilute hydrochloric acid, desalted with ion-exchanged water, and then dried. Thereafter, the activated carbon was pulverized by a roll mill and then dry-classified to obtain a porous material A having an average particle size of 150 µm. The toluene adsorption performance of the porous material A was 27.7%.

### (Example 2)

Coconut shell charcoal obtained by carbonizing coconut shell from the Philippines was subjected to steam activation at 900°C for 2 hours. The obtained coconut shell activated carbon was washed with dilute hydrochloric acid, desalted with ion-exchanged water, and then dried. Thereafter, the resulting product was pulverized by a roll mill and then dry-classified to obtain a porous material B having an average particle size of 150 µm. The toluene adsorption performance of the porous material B was 36.6%.

### (Example 3)

Coconut shell charcoal obtained by carbonizing coconut shell from the Philippines was subjected to steam activation at 900°C for 3 hours. The obtained coconut shell activated carbon was washed with dilute hydrochloric acid, desalted with ion-exchanged water, and then dried. Thereafter, the resulting product was pulverized by a roll mill and then dry-classified to obtain a porous material C having an average particle size of 150 µm. The toluene adsorption performance of the porous material C was 51.4%.

### (Example 4)

Coconut shell charcoal obtained by carbonizing coconut shell from the Philippines was subjected to steam activation at 900°C for 3.3 hours. The obtained coconut shell activated carbon was washed with dilute hydrochloric acid, desalted with ion-exchanged water, then dried, pulverized by a roll mill, and then dry-classified to obtain a porous material D having an average particle size of 150 µm. The toluene adsorption performance of the porous material D was 53.4%.

### (Example 5)

Coconut shell charcoal obtained by carbonizing coconut shell from the Philippines was subjected to steam activation at 900°C for 1 hour. 600 g of the obtained raw material activated carbon was added to 2120 mL of hydrochloric acid (0.3 N), boiled and washed for 20 minutes, then sufficiently washed with ion-exchanged water until the pH reached 5 to 7, and dried with a natural convection constant temperature dryer at 115 ± 5°C for 4 hours to reduce potassium in the activated carbon, and then the raw material activated carbon and a calcium element supply source (a calcium nitrate aqueous solution (a calcium nitrate aqueous solution (23 g of calcium nitrate tetrahydrate, 117 g of ion-exchanged water) was sprayed onto 500 g of the obtained activated carbon, and then the activated carbon was dried in a natural convection constant temperature dryer at 115 ± 5°C for 5 to 7 hours)) were brought into contact with each other to further activate the activated carbon. Thereafter, the obtained coconut shell activated carbon was washed with dilute hydrochloric acid, desalted with ion-exchanged water, and then dried. Then, the resulting product was pulverized by a roll mill and then dry-classified to obtain a porous material E having an average particle size of 150 µm. The toluene adsorption performance of the porous material E was 71.2%.

### (Example 6)

The carbonaceous raw material was bituminous coal, and the dry distillation treatment was performed at 700°C. Subsequently, a mixed gas of water vapor, carbon dioxide, and nitrogen was introduced into the resulting dry distillate, and the resulting product was activated at a temperature of 750°C for 5 hours. Thereafter, the resulting product was pulverized by a roll mill and then dry-classified to obtain a porous material F having an average particle size of 150 µm. The toluene adsorption performance of the porous material F was 38.4%.

### (Example 7)

As a carbonaceous raw material, a wooden raw material was impregnated with phosphoric acid, and then activated at 500°C. Subsequently, the resulting product was washed with water and dried, and then the obtained activated carbon was pulverized by a ball mill to obtain porous material G1 having an average particle size of 30 µm and a toluene adsorption performance of 45.3%. In addition, coconut shell charcoal obtained by carbonizing coconut shell from the Philippines was subjected to steam activation at 900°C for 2.5 hours. The obtained coconut shell activated carbon was washed with dilute hydrochloric acid, desalted with ion-exchanged water, and then dried. Subsequently, the resulting product was pulverized by a roll mill and then dry-classified to obtain a porous material G2 having an average particle size of 150 µm and a toluene adsorption performance of 45.3%. By blending G1 and G2 at 95:5, a porous material G having a toluene adsorption performance of 45.3% was obtained.

### (Example 8)

As a carbonaceous raw material, a wooden raw material was subjected to steam activation at 900°C. The resulting activated carbon was pulverized by a roll mill and then dry-classified to obtain a porous material H1 having an average particle size of 150 µm and a toluene adsorption performance of 33.0%. In addition, coconut shell charcoal obtained by carbonizing coconut shell from the Philippines was subjected to steam activation at 900°C for 1.5 hours. The obtained coconut shell activated carbon was washed with dilute hydrochloric acid, desalted with ion-exchanged water, and then dried. Subsequently, the resulting product was pulverized by a roll mill and then dry-classified to obtain a porous material H2 having an average particle size of 150 µm and a toluene adsorption performance of 33.0%. By blending H1 and H2 at 95:5, a porous material H having a toluene adsorption performance of 33.0% was obtained.

### (Comparative Example 1)

The carbonaceous raw material was bituminous coal, and the dry distillation treatment was performed at 960°C. Thereafter, a mixed gas of water vapor, carbon dioxide and nitrogen was introduced into the dry distillate, and the resulting product was activated at an activation temperature of 1000°C. The resulting activated carbon was pulverized by a roll mill and then dry-classified to obtain a porous material I having an average particle size of 150 µm. The toluene adsorption performance of the porous material I was 57.3%.

### [Production of Molded Body/Filter]

A total amount of 8.36 kg was prepared by mixing 100.0 parts by mass of the porous material and 5.0 parts by mass of an acrylic fibrous binder ("acrylic fiber BiPUL 50TWF" manufactured by Japan Exlan Co., Ltd., CSF value: 83 mL), and tap water was added. The amount of slurry after addition was 83.6 L.

Subsequently, a core was attached to the mold (outer diameter: 40.0 mmφ, center shaft diameter: 11.6 mmφ, outer diameter flange interval: 365.0 mmH) for cylindrical molding shown in FIG. 1 described above, and the obtained slurry was molded to 43 mmφ slightly larger than the outer diameter of the mold by performing only suction at 400 mmHg, and then dried at 120°C for 16 hours. Then, the obtained molded body was mounted on an automatic grinder shown in FIG. 2, and the outer surface of the molded body was ground at a rotational speed of the molded body of 360 rpm, a rotational speed of grindstone of 2535 rpm, and a moving speed of the grindstone of 250 mm/10 sec (2.5 cm/sec) to obtain a cylindrical filter having an outer diameter of 38.6 mmφ, an inner diameter of 12 mmφ, and a height of 108.0 mmH.

In FIG. 2, reference signs denote 11: grinder, 12 and 17: rotary shaft, 13: disc-shaped grindstone, 14 and 18: motor, 15 and 16: air cylinder, 19: operation panel, and 20: molded body.

### <Evaluation Method>

By measuring the toluene release amount of the porous materials A to I of Examples 1 to 8 and Comparative Example 1, the suppression of desorption of the adsorbed substance of each material was evaluated.

### (Measurement of Toluene Release Amount)

### • Measurement of Packing Density (Tap Density) of Porous Material

In order to obtain the toluene release amount, first, the packing density of each porous material was measured as follows:
The porous material was dried at 115°C for 3 hours and then cooled to room temperature in a desiccator using silica gel as a desiccant. Thereafter, about 30 ml of the porous material was poured into a 50 ml measuring cylinder, and the porous material was vibrated in the vertical direction for 3 minutes. Then, the volume value was read, the weight of the porous material was measured, and the packing density was calculated according to the following formula. 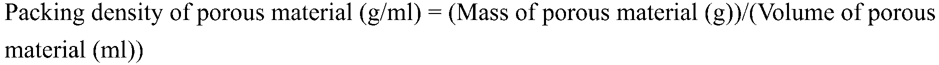 Packing density of porous material (g/ml) = (Mass of porous material (g))/(Volume of porous material (ml))

### • Toluene Release Amount

The porous material was dried in a constant temperature dryer at 115°C for 3 hours, and then cooled to room temperature in a desiccator using silica gel as a desiccant. Subsequently, toluene-containing dry air having a concentration of 1/10 of the saturation concentration was passed through the porous material in an incubator at 25°C until the toluene adsorption amount reached 1 wt% to obtain a porous material having a toluene adsorption amount of 1 wt%.

0.2 g of the porous material was precisely weighed and immersed in 0.05 L of a 20 vol% ethanol aqueous solution. Subsequently, the mixture was stirred at 25°C for 2 hours, then filtered with No. 5C filter paper, the toluene concentration (mg/L) in the filtrate was measured with a gas chromatograph mass spectrometer (GC-MS), and the toluene release amount (mg/ml) per porous material volume was calculated by the following formula. 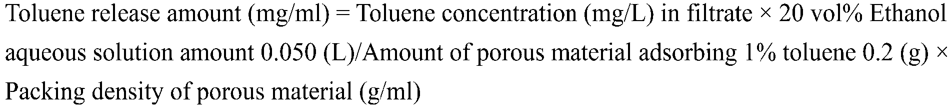 Toluene release amount (mg/ml) = Toluene concentration (mg/L) in filtrate × 20 vol% Ethanol aqueous solution amount 0.050 (L)/Amount of porous material adsorbing 1% toluene 0.2 (g) × Packing density of porous material (g/ml)

In this evaluation, when the toluene release amount per porous material volume obtained above was 0.080 mg/ml or less, it was determined as acceptable.

The above results are summarized in Table 1.

**[Table 1]**

| | Example 1 | Example 2 | Example 3 | Example 4 | Example 5 | Example 6 | Example 7 | Example 8 | Comparative Example 1 |
|---|---|---|---|---|---|---|---|---|---|
| | Porous material A | Porous material B | Porous material C | Porous material D | Porous material E | Porous material F | Porous material G | Porous material H | Porous material I |
| BET specific surface area (m²/g) | 969 | 1214 | 1736 | 1677 | 2171 | 1438 | 1525 | 1077 | 1370 |
| Mesopore volume (cm³/g) | 0.041 | 0.060 | 0.113 | 0.091 | 0.693 | 0.122 | 0.876 | 0.478 | 0.588 |
| Micropore volume (cm³/g) | 0.42 | 0.55 | 0.81 | 0.76 | 1.31 | 0.71 | 1.26 | 0.72 | 0.98 |
| Amount of acid functional groups (meq/g) | 0.117 | 0.117 | 0.157 | 0.212 | 0.070 | 0.427 | 0.607 | 0.175 | 0.032 |
| Amount of acid functional groups of molded body (meq/g) | 0.135 | 0.182 | 0.177 | 0.215 | 0.080 | 0.460 | 0.612 | 0.172 | 0.107 |
| Packing density (g/ml) | 0.532 | 0.487 | 0.408 | 0.406 | 0.244 | 0.486 | 0.265 | 0.281 | 0.365 |
| Toluene adsorption performance (wt%) | 27.7 | 36.6 | 51.4 | 53.4 | 71.2 | 38.4 | 45.3 | 33.0 | 57.3 |
| Methylene blue adsorption performance (mg/g) | 127.6 | 208.3 | 269.6 | 269.8 | 331.2 | 205.6 | 207.6 | 202.7 | 251.7 |
| Toluene release amount (mg/ml) | 0.008 | 0.010 | 0.009 | 0.010 | 0.028 | 0.062 | 0.079 | 0.027 | 0.082 |

### (Discussion)

As is apparent from the results in Table 1, it was found that the release of adsorbed toluene was suppressed in all the porous materials of Examples. On the other hand, it is considered that the porous material of Comparative Example which does not satisfy the definitions of the mesopore volume and the micropore volume is difficult to use for alcohol purification since adsorbed toluene is released.

This application is based on Japanese Patent Application No. 2024-010011 filed on January 26, 2024, the content of which is included in the present application.

In order to express the present invention, the present invention has been appropriately and sufficiently described through the embodiments with reference to specific examples, drawings, and the like in the above, but it should be recognized that a person skilled in the art can easily change and/or improve the above-described embodiments. Therefore, unless a change or improvement made by a person skilled in the art is at a level departing from the scope of rights of the claims described in the claims, the change or improvement is interpreted to be included in the scope of rights of the claims.

### Industrial Applicability

The present invention has wide industrial applicability in a technical field related to alcohol purification and porous materials.

### Description for reference signs

- 1: mold

- 2: core body
- 3: suction hole
- 4, 4': flange
- 5: filtrate discharge port
- 11: grinder
- 12, 17: rotary shaft
- 13: disc-shaped grindstone
- 14, 18: motor
- 15, 16: air cylinder
- 19: operation panel
- 20: molded body

## Claims

1. A porous material for alcohol purification that
satisfies at least one of a mesopore volume of 0.550 cm³/g or less or a micropore volume of 1.00 cm³/g or more, and
has a BET specific surface area of 500 m²/g or more.

2. The porous material for alcohol purification according to claim 1, having an amount of acid functional groups of 0.700 meq/g or less.

3. The porous material for alcohol purification according to claim 1, wherein the porous material is activated carbon.

4. A molded body comprising the porous material for alcohol purification according to claim 1 and a binder.

5. The molded body according to claim 4, having an amount of acid functional groups of 0.800 meq/g or less when a part of the molded body was cut out and measured.

6. A filter for alcohol purification comprising the porous material for alcohol purification according to claim 1 or the molded body according to claim 4.

7. A method for purifying beverage alcohol, comprising removing impurities contained in fermented alcohol by being adsorbed on the porous material for alcohol purification according to claim 1.
